(19)

Europäisches
Patentamt

European
Patent Office

Office européen
des brevets

(11)     **EP 4 738 225 A1**

(12)     **EUROPEAN PATENT APPLICATION**
published in accordance with Art. 153(4) EPC

(43) Date of publication:
**06.05.2026   Bulletin 2026/19**

(51) International Patent Classification (IPC):
**G06Q 30/0251** *(2023.01)*

(21) Application number: **24842404.6**

(86) International application number:
**PCT/CN2024/106078**

(22) Date of filing: **18.07.2024**

(87) International publication number:
**WO 2025/016416 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **20.07.2023   CN 202310896986**

(71) Applicant: **Huawei Technologies Co., Ltd.
Shenzhen, Guangdong 518129 (CN)**

(72) Inventors:
• **GUO, Huifeng
  Shenzhen, Guangdong 518129 (CN)**

• **TANG, Ruiming
  Shenzhen, Guangdong 518129 (CN)**
• **WANG, Yichao
  Shenzhen, Guangdong 518129 (CN)**
• **MENG, Xiaojun
  Shenzhen, Guangdong 518129 (CN)**
• **QIAN, Li
  Shenzhen, Guangdong 518129 (CN)**

(74) Representative: **Maiwald GmbH
Engineering
Elisenhof
Elisenstrasse 3
80335 München (DE)**

(54)     **DATA PROCESSING METHOD AND RELATED APPARATUS**

(57)     A data processing method may be applied to the field of artificial intelligence. The method includes: obtaining a first prompt, where the first prompt includes description information of an advertisement and attribute information of a media, the media is a delivery platform of the advertisement, and the first prompt indicates to generate a delivery demand of the advertisement on the media based on the description information and the attribute information of the media; obtaining the delivery demand on the media based on the first prompt by using a language model; and determining, based on a received advertisement access request of a user on the media and a relationship between the delivery demand and intent information of the user, whether to deliver the advertisement to the user. In this application, the language model is guided by using the first prompt, to help an advertiser efficiently and accurately establish an advertisement delivery task (that is, a delivery demand) at a scenario granularity without media expertise.

EP 4 738 225 A1

Obtain a first prompt, where the first prompt includes description information of an advertisement and attribute information of a media, the media is a delivery platform of the advertisement, and the first prompt indicates to generate a delivery demand of the advertisement on the media based on the description information and the attribute information of the media — 501

Obtain the delivery demand on the media based on the first prompt by using a language model — 502

Determine, based on a received advertisement access request of a user on the media and a relationship between the delivery demand and intent information of the user, whether to deliver the advertisement to the user — 503

FIG. 5

## Description

This application claims priority to Chinese Patent Application No. 202310896986.4, filed with the China National Intellectual Property Administration on July 20, 2023 and entitled "DATA PROCESSING METHOD AND RELATED APPARATUS", which is incorporated herein by reference in its entirety.

## TECHNICAL FIELD

This application relates to the field of artificial intelligence, and in particular, to a data processing method and a related apparatus.

## BACKGROUND

Artificial intelligence (artificial intelligence, AI) is a theory, a method, a technology, and an application system in which human intelligence is simulated, extended, and expanded by using a digital computer or a machine controlled by a digital computer, to perceive an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. Artificial intelligence is to research design principles and implementation methods of various intelligent machines, so that the machines have perception, inference, and decision-making functions.

A machine learning system includes a personalized recommendation system, and trains parameters of a machine learning model based on input data and labels by using an optimization method such as gradient descent. After the model parameters converge, the model may be used to complete prediction of unknown data. The following uses prediction of a click-through rate in the personalized recommendation system as an example. Input data of the personalized recommendation system includes user attributes and commodity attributes. How to predict a personalized recommendation list based on a user preference has important impact on improvement of recommendation accuracy of the recommendation system.

With the release of a series of large language models (large language models, LLMs), such as ChatGPT, many manufacturers study application of the large language models on a recommendation task. ChatGPT is a large language model that uses a human feedback reinforcement learning technology to align a generative capability of the large language model with a human intent. In this way, ChatGPT has a human conversation capability with fairly high performance.

In an advertisement delivery system, an advertiser may set an advertisement delivery task at a demand-side platform (demand-side platform, DSP) according to a demand of the advertiser. A user group label, a keyword, and the like are used as anchors for formulating the task, and the advertiser selects a keyword suitable for the advertiser to formulate the task. However, the advertiser selects the keyword from the perspective of the advertiser to establish the task. Due to knowledge limitation, the advertiser may be unable to select a keyword that is most favorable to the advertiser and that can best reflect the demand of the advertiser. This may result in relatively low advertisement delivery accuracy.

## SUMMARY

This application provides a data processing method, to help an advertiser efficiently and accurately construct an advertisement delivery task at a scenario granularity without media background knowledge.

According to a first aspect, this application provides a data processing method. The method includes: obtaining a first prompt, where the first prompt includes description information of an advertisement and attribute information of a media, the media is a delivery platform of the advertisement, and the first prompt indicates to generate a delivery demand of the advertisement on the media based on the description information and the attribute information of the media; obtaining the delivery demand on the media based on the first prompt by using a language model; and determining, based on a received advertisement access request of a user on the media and a relationship between the delivery demand and intent information of the user, whether to deliver the advertisement to the user.

The language model is guided by using the first prompt, to help an advertiser efficiently and accurately construct an advertisement delivery task at a scenario granularity without media background knowledge. In addition, the advertisement delivery task may be adjusted in an interactive manner.

In a possible implementation, the delivery demand generated by using the language model includes a plurality of slots and a description corresponding to each slot. Each slot corresponds to one demand. Specifically, the plurality of slots may be specified in the prompt, and the language model may be guided by using the first prompt to generate the description of the delivery demand corresponding to each slot. In other words, the first prompt may specifically indicate to generate, based on the description information and the attribute information of the media, the plurality of slots and the description corresponding to each slot. Each slot corresponds to one delivery demand.

In a possible implementation, obtaining the delivery demand on the media based on the first prompt by using the language model includes: obtaining a candidate delivery demand on the media based on the first prompt by using the language model; and receiving modification information for the candidate delivery demand, and obtaining the delivery demand on the media based on a second prompt by using the language model, where the second prompt indicates to modify the candidate delivery demand based on the modification information.

The delivery task is usually not formulated overnight. After the language model obtains the delivery demand based on the first prompt, the advertiser may adjust a result obtained by using the language model, and the language model may regenerate a delivery demand based on an adjusted demand. For example, the task formulated by the language model may be adjusted and regenerated based on another interaction manner such as a dialog.

In addition, generally, the attribute information of the media may include descriptive information of the media, and may further include attribute information of a user using the media (the attribute information of the user can indicate a feature of preference for the media, and therefore may be used as one piece of the attribute information of the media). The attribute information of the user may be information maintained by a DMP. Generally, the attribute information of the user is represented by using a label in limited space. However, this representation manner has poor generalization and lacks rich semantic information expression.

In this embodiment of this application, the attribute information of the user is enriched by constructing a prompt (third prompt). Specifically, the third prompt may be obtained. The third prompt includes a historical behavior of the user. The third prompt indicates to enrich profile information of the user based on the historical behavior. The historical behavior may be historical operation information (for example, an advertisement on which a click behavior occurs) of the user on a media platform. The profile information of the user is obtained based on the third prompt by using the language model. The profile information of the user obtained by using the language model may be used as the attribute information of the media. The profile information, obtained by using the language model, of the user may include a regenerated result of the historical behavior of the user. The result may include a behavior that has not been performed by the user in the past but is likely to be performed in the future. The result may further include another description with richer semantics for the historical behavior of the user.

In a possible implementation, the method further includes: obtaining a fourth prompt, where the fourth prompt includes corresponding context information when the user triggers an advertisement access request on the media, and the fourth prompt indicates to determine the intent information of the user based on the context information; and obtaining the intent information of the user based on the fourth prompt by using the language model.

In this embodiment of this application, for different user requests, user intents of the user that better conform to current scenarios may be generated for the user requests. The intent may provide a correlation between a recall advertisement and a user intent. In addition, the intent may more accurately depict a user profile, thereby promoting an estimated click-through rate and a conversion rate and finally improving advertising effect.

According to a second aspect, this application provides a data processing apparatus. The apparatus includes:

an obtaining module, configured to obtain a first prompt, where the first prompt includes description information of an advertisement and attribute information of a media, the media is a delivery platform of the advertisement, and the first prompt indicates to generate a delivery demand of the advertisement on the media based on the description information and the attribute information of the media; and

a processing module, configured to: obtain the delivery demand on the media based on the first prompt by using a language model; and

determine, based on a received advertisement access request of a user on the media and a relationship between the delivery demand and intent information of the user, whether to deliver the advertisement to the user.

In a possible implementation, the delivery demand includes a plurality of slots and a description corresponding to each slot. Each slot corresponds to one demand. The first prompt specifically indicates to generate, based on the description information and the attribute information of the media, the plurality of slots and the description corresponding to each slot. Each slot corresponds to one delivery demand.

In a possible implementation, the processing module is specifically configured to:

obtain a candidate delivery demand on the media based on the first prompt by using the language model; and

receive modification information for the candidate delivery demand, and obtain the delivery demand on the media based on a second prompt by using the language model, where the second prompt indicates to modify the candidate delivery demand based on the modification information.

In a possible implementation, the obtaining module is further configured to:

obtain a third prompt, where the third prompt includes a historical behavior of the user, and the third prompt indicates to enrich profile information of the user based on the historical behavior.

The processing module is further configured to obtain the attribute information of the user based on the third prompt by using the language model. The attribute information of the media includes the profile information of the user.

In a possible implementation, the obtaining module is further configured to:

obtain a fourth prompt, where the fourth prompt includes corresponding context information when the user triggers an advertisement access request on the media, and the fourth prompt indicates to determine the intent information of the user based on the context information.

The processing module is further configured to obtain the intent information of the user based on the fourth prompt by using the language model.

According to a third aspect, an embodiment of this application provides a data processing apparatus. The apparatus may include a memory, a processor, and a bus system. The memory is configured to store a program, and the processor is configured to execute the program in the memory, to perform the method according to any one of the optional implementations of the first aspect.

According to a fourth aspect, an embodiment of this application provides a computer-readable storage medium. The computer-readable storage medium stores a computer program. When the computer program is run on a computer, the computer is enabled to perform the method according to the first aspect or any one of the optional implementations of the first aspect.

According to a fifth aspect, an embodiment of this application provides a computer program product, including code. When the code is executed, the code is used to implement the method according to the first aspect or any one of the optional implementations of the first aspect.

According to a sixth aspect, this application provides a chip system. The chip system includes a processor, configured to support an execution device or a training device in implementing functions in the foregoing aspects, for example, send or process data or information in the foregoing method. In a possible design, the chip system further includes a memory. The memory is configured to store program instructions and data that are necessary for the execution device or the training device. The chip system may include a chip, or may include a chip and another discrete device.

## BRIEF DESCRIPTION OF DRAWINGS

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4 is a diagram of a recommendation scenario according to an embodiment of this application;
FIG. 5 is a schematic flowchart of a data processing method according to an embodiment of this application;
FIG. 6 is a schematic flowchart of a data processing method according to an embodiment of this application;
FIG. 7 is a schematic flowchart of a data processing method according to an embodiment of this application;
FIG. 8 is a diagram of bid sorting and charging according to an embodiment of this application;
FIG. 9 is a diagram of a structure of a data processing apparatus according to an embodiment of this application;
FIG. 10 is a diagram of an execution device according to an embodiment of this application;
FIG. 11 is a diagram of a training device according to an embodiment of this application; and
FIG. 12 is a diagram of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

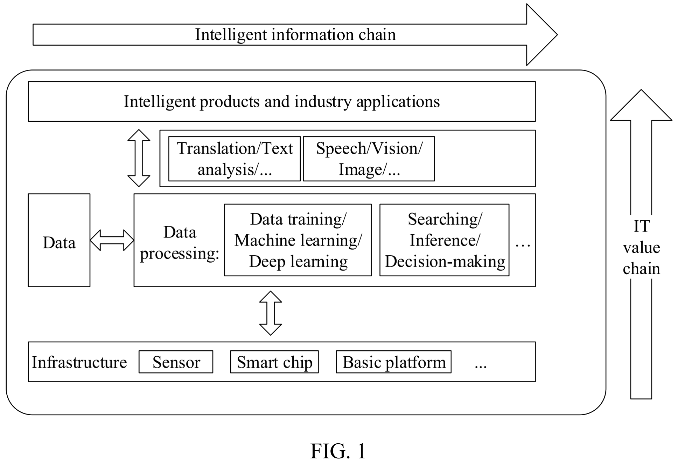

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a legacy device, and includes service data of an existing system and perception data such as force, displacement, a liquid level, a temperature, and humidity.

(3) Data processing

Data processing usually includes data training, machine learning, deep learning, searching, inference, decision making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent products and industry applications

The intelligent products and industry applications are products and applications of the artificial intelligence system in various fields, and are encapsulation for an overall artificial intelligence solution, so that decision making for intelligent information is productized and the applications are implemented. Application fields thereof mainly include an intelligent terminal, intelligent transportation, intelligent healthcare, autonomous driving, a smart city, and the like.
Embodiments of this application may be applied to the information recommendation field. The scenario includes but is not limited to scenarios related to e-commerce product recommendation, search engine result recommendation, application market recommendation, music recommendation, and video recommendation. A recommended item in various different application scenarios may also be referred to as an "object" for ease of subsequent description. To be specific, in different recommendation scenarios, the recommended object may be an app, a video, music, or a commodity (for example, a presentation interface of an online shopping platform displays different commodities according to different users, which may also be presented based on a recommendation result of a recommendation model in essence). These recommendation scenarios usually involve collection of a user behavior log, log data preprocessing (for example, quantization and sampling), sample set training to obtain a recommendation model, and analyze and process, based on the recommendation model, an object (for example, an app or music) in a scenario corresponding to a training sample item. For example, if a sample selected in a training process of the recommendation model is from an operation performed by a user of an application market in a mobile phone on a recommended app, a trained recommendation model is applicable to the app (application) on the mobile phone, or may be used in an app (application) market on another type of terminal to recommend an app on the terminal. The recommendation model finally computes recommendation probabilities or scores of to-be-recommended objects. A recommendation system selects recommendation results according to a specific selection rule. For example, the recommendation results are ranked based on the recommendation probabilities or the scores, and are presented to the user through a corresponding application or terminal device, and the user performs an operation on an object in the recommendation results to perform a process such as generating the user behavior log.

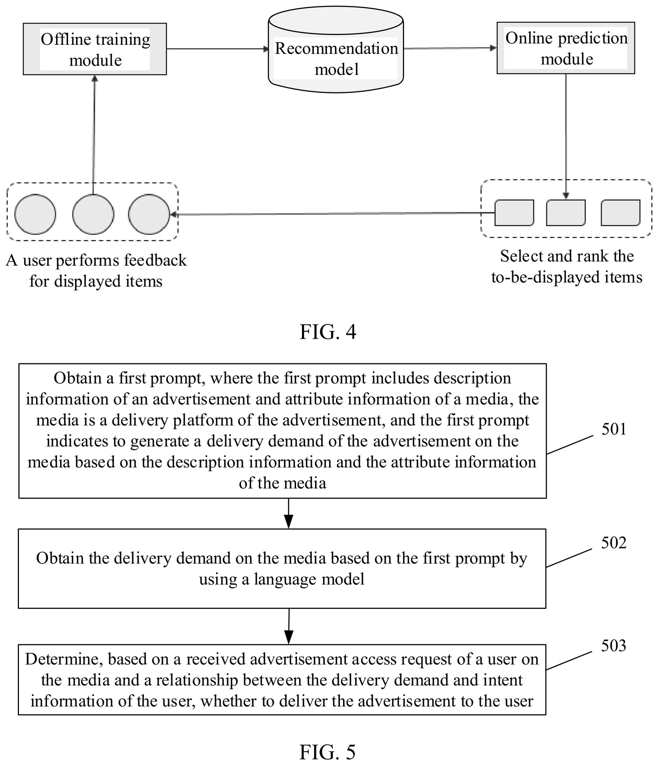

Refer to FIG. 4. In a recommendation process, when a user interacts with a recommendation system, a recommendation request is triggered. The recommendation system inputs the request and related feature information into a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs a user behavior, such as browsing, clicking, and downloading. The user behavior is stored in a log as training data. An offline training module irregularly updates a parameter of the recommendation model to improve recommendation effect of the model.

For example, when the user starts an application market on a mobile phone, a recommendation module of the application market may be triggered. The recommendation module of the application market predicts probabilities that the user downloads given candidate applications, based on a historical download record of the user, a clicking record of the user, features of the applications, and environment feature information such as time and a location. The application market displays the applications in descending order of the probabilities based on a prediction result, to increase download probabilities of the applications. Specifically, an application that is more likely to be downloaded is arranged in the front rank, and an application that is less likely to be downloaded is arranged in the rear rank. The user behavior is also stored in a log, and an offline training module trains and updates a parameter of a prediction model.

For another example, in an application related to a life-long companion, a cognitive brain may be constructed by simulating a mechanism of a human brain and based on historical data of the user in domains such as video, music, and news by using various models and algorithms, thereby establishing a life-long learning system framework for the user. The life-long companion may record a past event of the user based on system data, application data, and the like, understand a current intent of the user, predict a future action or a future behavior of the user, and finally implement an intelligent service. At a current first stage, user behavior data (including information such as a device-side SMS message, a photo, and an email event) is obtained from a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

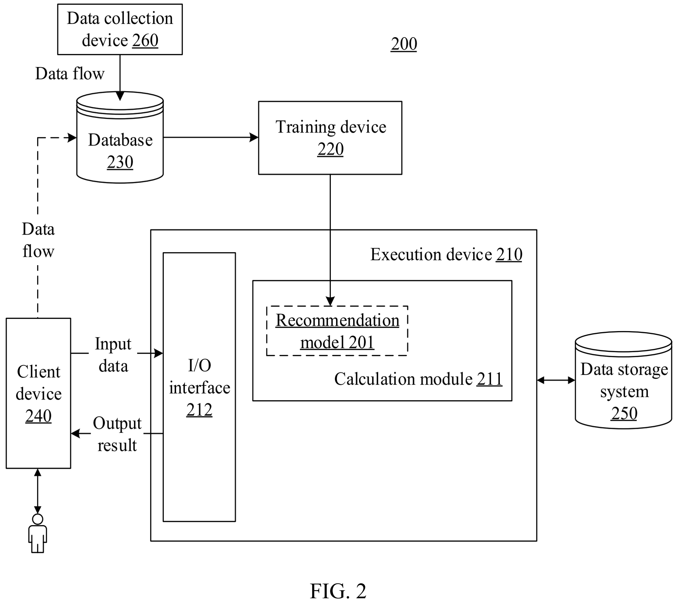

Refer to FIG. 2. An embodiment of the present invention provides a recommendation system architecture 200. A data collection device 260 is configured to collect a sample. One training sample may include a plurality of pieces of feature information (alternatively described as attribute information, for example, a user attribute and an item attribute). There may be a plurality of types of feature information, which may specifically include user feature information, object feature information, and a label feature. The user feature information represents a feature of a user, for example, gender, age, occupation, or hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. Usually a label feature of a sample may be obtained based on information about an operation performed by the user on a recommended object. A sample in which the user performs an operation on a recommended object is a positive sample, and a sample in which the user does not perform an operation on a recommended object or just browses the recommended object is a negative sample. For example, when the user clicks, downloads, or purchases the recommended object, the label feature is 1, indicating that the sample is a positive sample; or if the user does not perform any operation on the recommended object, the label feature is 0, indicating that the sample is a negative sample. The sample may be stored in a database 230 after being collected. A part or all of feature information in the sample in the database 230 may be directly obtained from a client device 240, for example, user feature information, information (used to determine a type identifier) about an operation performed by the user on an object, and object feature information (for example, an object identifier). A training device 220 obtains a model parameter matrix through training based on samples in the database 230, to generate a recommendation model 201 (for example, a feature extraction network and a neural network in embodiments of this application). The following describes in more detail how the training device 220 performs training to obtain the model parameter matrix for generating the recommendation model 201. The recommendation model 201 can be used to evaluate a large quantity of objects to obtain a score of each to-be-recommended object, to further recommend a specified quantity of objects or a preset quantity of objects from an evaluation result of the large quantity of objects. A computing module 211 obtains a recommendation result based on the evaluation result of the recommendation model 201, and recommends the recommendation result to the client device through an I/O interface 212.

In this embodiment of this application, the training device 220 may select positive and negative samples from a sample set in the database 230, add the positive and negative samples to a training set, and then perform training based on the samples in the training set by using a recommendation model, to obtain a trained recommendation model. For implementation details of the computing module 211, refer to detailed descriptions of a method embodiment shown in FIG. 5.

After performing training based on the sample to obtain the model parameter matrix that is used for constructing the recommendation model 201, the training device 220 sends the recommendation model 201 to an execution device 210, or directly sends the model parameter matrix to the execution device 210. The recommendation model is constructed in the execution device 210, for recommending a corresponding system. For example, a recommendation model obtained through training based on a video-related sample may be used in a video website or app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, user identifier, user identity, gender, occupation, and hobby, from the client device 240 through the I/O interface 212. The information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, or may be independently disposed, or may be disposed in another network entity. There may be one or more data storage systems 250.

The computing module 211 processes the user feature information and the feature information of the to-be-recommended object by using the recommendation model 201. For example, the computing module 211 analyzes and processes the user feature information and the feature information of the to-be-recommended object by using the recommendation model 201, to obtain a score of the to-be-recommended object. The to-be-recommended object is ranked based on the score. An object in the front rank is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that FIG. 2 is merely a diagram of a system architecture according to an embodiment of the present invention. A position relationship between devices, components, modules, and the like shown in the figure does not constitute any limitation. For example, in FIG. 2, the data storage system 250 is an external memory relative to the execution device 210, and in another case, the data storage system 250 may alternatively be disposed in the execution device 210.

In this embodiment of this application, the training device 220, the execution device 210, and the client device 240 may be three different physical devices, or the training device 220 and the execution device 210 may be on a same physical device or one cluster, or the execution device 210 and the client device 240 may be on a same physical device or one cluster.

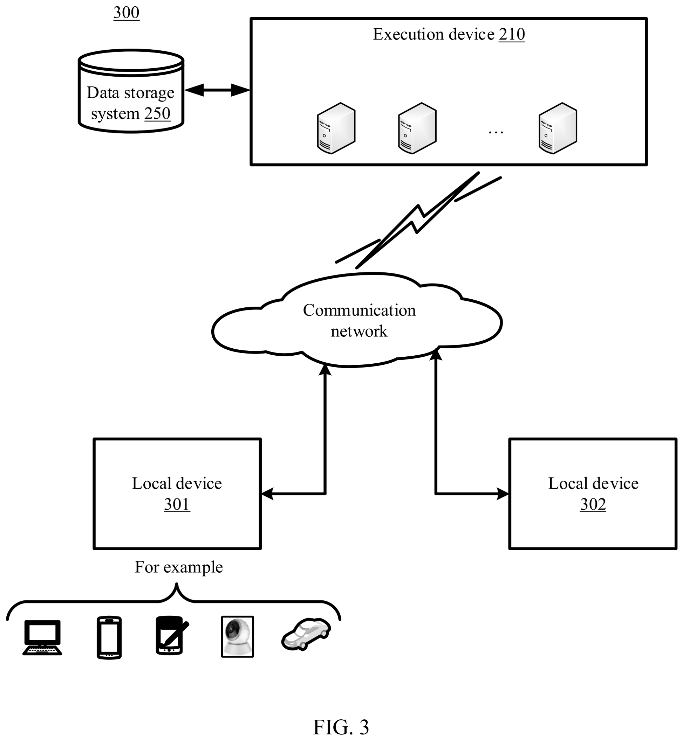

Refer to FIG. 3. An embodiment of the present invention provides a system architecture 300. In this architecture, the execution device 210 is implemented by one or more servers. Optionally, the execution device 210 cooperates with another computing device, for example, a device such as a data storage device, a router, or a load balancer. The execution device 210 may be disposed on one physical site, or distributed on a plurality of physical sites. The execution device 210 may use data in the data storage system 250 or invoke program code in the data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends a to-be-recommended object to a user based on a ranking result. For example, top 10 objects in the ranking result are recommended to the user.

The data storage system 250 is configured to receive and store a parameter that is of the recommendation model and that is sent by a training device, is configured to store data of a recommendation result obtained by using the recommendation model, and certainly may further include program code (or an instruction) needed for normal running of the storage system 250. The data storage system 250 may be one device deployed outside the execution device 210 or a distributed storage cluster including a plurality of devices deployed outside the execution device 210. In this case, when the execution device 210 needs to use the data in the storage system 250, the storage system 250 may send the data needed by the execution device to the execution device 210. Correspondingly, the execution device 210 receives and stores (or buffers) the data. Certainly, the data storage system 250 may be alternatively deployed in the execution device 210. When the data storage system 250 is deployed in the execution device 210, the distributed storage system may include one or more memories. Optionally, when there are a plurality of memories, different memories are configured to store different types of data. For example, the model parameter of the recommendation model generated by the training device and the data of the recommendation result obtained by using the recommendation model may be stored in two different memories respectively.

Users may operate their user equipment (for example, the local device 301 and the local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 210 through a communication network of any communication mechanism/communication standard. The communication network may be a wide area network, a local area network, a point-to-point connection, or any combination thereof.

In another implementation, the execution device 210 may be implemented by the local device. For example, the local device 301 may implement a recommendation function of the execution device 210 based on a recommendation model by obtaining user feature information and feeding back a recommendation result to the user, or provide a service for the user of the local device 302.

Embodiments of this application relate to massive application of a neural network. Therefore, for ease of understanding, the following first describes related terms and related concepts such as the neural network in embodiments of this application.

1. Click-through rate (click-through rate, CTR)

The click-through rate, also referred to as a click-through ratio, is a ratio of a quantity of clicks for recommendation information (for example, a recommended item) on a website or an application to a quantity of impressions for the recommendation information. The click-through rate is usually an important indicator in a recommendation system for measuring the recommendation system.

2. Personalized recommendation system

The personalized recommendation system is a system that analyzes historical data of a user (for example, operation information in embodiments of this application) by using a machine learning algorithm, and with this, predicts a new request and provides a personalized recommendation result.

3. Offline training (offline training)

The offline training is a module, in a personalized recommendation system, that iteratively updates a parameter of a recommendation model by using a machine learning algorithm based on historical data of a user (for example, operation information in embodiments of this application) until a specified requirement is met.

4. Online inference (online inference)

The online inference is to predict, based on a model obtained through offline training, preference of a user for a recommended item in a current context environment based on features of the user, the item, and context, and predict probability that the user selects the recommended item.

For example, FIG. 3 is a diagram of a recommendation system according to an embodiment of this application. As shown in FIG. 3, when a user enters a system, a recommendation request is triggered. The recommendation system inputs the request and related information (for example, operation information in this embodiment of this application) of the request into the recommendation model, and then predicts a selection rate of the user for an item in the system. Further, items are ranked in descending order based on predicted selection rates or based on a function of the selection rates. That is, the recommendation system may sequentially display the items at different locations as a recommendation result for the user. The user browses the items at different locations, and performs a user behavior such as browsing, selecting, and downloading. In addition, an actual behavior of the user is stored in a log as training data. An offline training module continuously updates a parameter of the recommendation model to improve prediction effect of the model.

For example, when the user starts an application market on a smart terminal (for example, a mobile phone), a recommendation system in the application market may be triggered. The recommendation system in the application market predicts probabilities that the user downloads candidate recommended apps, based on a historical behavior log of the user, for example, a historical download record of the user, a user selection record, and a feature of the application market, for example, environment feature information such as time and a location. Based on a calculated result, the recommendation system of the application market may present the candidate apps in descending order of values of the predicted probabilities, to improve a download probability of the candidate app.

For example, an app with a relatively high predicted user selection rate may be presented at a front recommendation position, and an app with a relatively low predicted user selection rate may be presented in a back recommendation position.

The recommendation model may be a neural network model. The following describes related terms and concepts of a neural network that may be used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f(\sum_{s=1}^{n} W_s x_s + b).$$

Herein, s=1, 2, ..., n; n is a natural number greater than 1; Ws is a weight of xs; b is a bias of the neuron; and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network including many hidden layers. There is no special metric criterion for the "many" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients W and offset vectors $\vec{b}$. Definitions of these parameters in the DNN are as follows: The coefficient W is used as an example. It is assumed that in a DNN having three layers, a linear coefficient from a $4^{th}$ neuron at a $2^{nd}$ layer to a $2^{nd}$ neuron at a $3^{rd}$ layer is defined as $w_{24}^{3}$. The superscript 3 represents a layer at which the coefficient W is located, and the subscript corresponds to an output $3^{rd}$-layer index 2 and an input $2^{nd}$-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training the deep neural network, because it is expected that an output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs in an output, and the parameter in the initial model is updated based on back propagation error loss information, to make the error loss converge. The back propagation algorithm is an error-loss-centered back propagation motion intended to obtain a parameter, such as a weight matrix, of an optimal model.

(5) Machine learning system

The machine learning system trains parameters of a machine learning model based on input data and labels by using an optimization method such as gradient descent, and finally makes a prediction on unknown data by using a trained model.

(6) Personalized recommendation system

The personalized recommendation system is a system that analyzes and models historical data of a user by using a machine learning algorithm, and with this, predicts a new user request and provides a personalized recommendation result.

(7) Pre-trained language model: The pre-trained language model is to perform unsupervised learning on a large-scale corpus to obtain a representation at a word or sub-word level, and further train a specific natural language processing task on this basis. The pre-trained language model is usually modeled by using a neural network. A probability distribution of a next word or sub-word in a text may be output by inputting the text into the model. The pre-trained language model has been widely used in the natural language processing field, including tasks such as machine translation, speech recognition, text classification, and information retrieval. Significant effect improvement is achieved.

(8) Prompt prompt

The prompt is a natural language term, and includes a hard template and a soft template. The hard template is usually a natural language word or sentence with a specific meaning, and the soft template is usually a parameterized representation vector with no meaning.

A machine learning system includes a personalized recommendation system, and trains parameters of a machine learning model based on input data and labels by using an optimization method such as gradient descent. After the model parameters converge, the model may be used to complete prediction of unknown data. The following uses prediction of a click-through rate in the personalized recommendation system as an example. Input data of the personalized recommendation system includes user attributes and commodity attributes. How to predict a personalized recommendation list based on a user preference has important impact on improvement of recommendation accuracy of the recommendation system.

With the release of a series of large language models, such as ChatGPT, many manufacturers study application of the large language models on a recommendation task. ChatGPT is a large language model that uses a human feedback reinforcement learning technology to align a generative capability of the large language model with a human intent. In this way, ChatGPT has a human conversation capability with fairly high performance.

In an advertisement delivery system, an advertiser may set an advertisement delivery task at a demand-side platform (demand-side platform, DSP) according to a demand of the advertiser. A user group label, a keyword, and the like are used as anchors for formulating the task, and the advertiser selects a keyword suitable for the advertiser to formulate the task. However, the advertiser selects the keyword from the perspective of the advertiser to establish the task. Due to knowledge limitation, the advertiser may be unable to select a keyword that is most favorable to the advertiser and that can best reflect the demand of the advertiser. This may result in relatively low advertisement delivery accuracy.

To resolve the foregoing problem, this application provides a data processing method. The data processing method may be a model inference process.

FIG. 5 is a diagram of an embodiment of a data processing method according to an embodiment of this application. As shown in FIG. 5, the data processing method provided in this embodiment of this application includes the following steps.

501: Obtain a first prompt, where the first prompt includes description information of an advertisement and attribute information of a media, the media is a delivery platform of the advertisement, and the first prompt indicates to generate a delivery demand of the advertisement on the media based on the description information and the attribute information of the media.

In an existing advertising system, a group label and a keyword are used as anchors for formulating an advertisement delivery task, and an advertiser selects a keyword suitable for the advertiser to formulate a task. This keyword-based manner has the following disadvantages: (1) It is difficult to mine deep semantic information. (2) A problem of user behavior differences on different advertising media ends cannot be resolved. In addition, the advertiser selects the keyword from the perspective of the advertiser to establish the task. Due to knowledge limitation, the advertiser may be unable to select a keyword that is most favorable to the advertiser and that can best reflect the demand of the advertiser. Keyword extraction based on conventional technologies is limited by a knowledge inference capability and a model discrimination capability of the model. Therefore, a real intent of the advertiser cannot be determined. In addition, advertisements suitable for delivery by a same user in different scenarios and context conditions are different. How to generate, in combination with current context, a high-relevance advertisement suitable for recall is also very important.

As a traffic entry, the media develops an advertisement slot for the advertiser to obtain advertising revenues. The media can develop an advertisement slot separately by using an ADN (advertisement network or ad network) or an ADX (advertisement exchange platform) or by directly connecting to the advertiser. For the ADN, the ad network sells media advertisement slots to advertisers in a unified manner, and the ad network has the pricing right. This is unfavorable to advertisers and media holders. For the ADX, the advertiser obtains the advertisement slot through bidding based on a value of the advertisement slot to the advertisement. This can maximize interests of both parties. The advertiser can set a targeting condition, a budget, a bid, and a creative idea for target audiences on the DSP platform based on a demand of the advertiser. The DSP automatically optimizes delivery effect and provides a data report through a technology and an algorithm. The DMP is used for data management; and manages scattered data in a unified manner, adds a group label to users, and provides the group label for the DSP to help the advertiser specify a task.

Running logic of the advertisement delivery system is as follows: The user accesses the media, and triggers a media advertisement slot request. The request enters a system such as the ADX. The system completes an advertisement recall based on scenario context information and user information that are carried in the request. Then, the system performs precise calculation based on details and features of a recalled advertisement, a user profile, and context information, determines a winning advertisement based on a bidding mechanism, and displays the advertisement to the user. After the user performs operations such as browsing, clicking, and downloading on the advertisement, the advertisement system determines whether to deduct a budget of the advertiser according to a requirement of an advertising task.

Before the advertisement bidding or the advertisement delivery at a media end, the advertiser needs to specify the advertising task, for example, the targeting condition, the budget, the bid, and the creative idea in the foregoing. Specification of the task of the advertiser depends on media data and user behavior data that are managed by the DMP data management platform to some extent.

To better select and generate media context information, help the advertiser construct a task more efficiently and accurately, and more accurately understand a real intent of the user in current context, embodiments of this application propose a generalized prompt-based advertisement delivery mechanism.

In a possible implementation, information about the advertising task (for example, the information may include description information of an advertisement) set by the advertiser may be obtained. The description information of the advertisement is a subjective description of the advertiser, and usually cannot accurately express the real intent of the advertiser. In this embodiment of this application, the first prompt may be constructed to guide the language model to determine, based on the description information of the advertisement and the attribute information of the media for delivery, the intent of the advertiser when the advertisement is delivered on the media (that is, the delivery demand of the advertisement in this embodiment of this application).

The media may be an advertisement delivery platform such as an app (for example, a short video platform) or a website.

For example, the description information of the advertisement may include a user group label that is selected and determined from candidate labels, or a user group label that is obtained by the DSP platform by performing an operation such as word segmentation on the description information after the advertiser inputs a text to describe a demand of the advertiser.

In this embodiment of this application, the first prompt is used to guide the language model to regenerate the description information of the advertisement with reference to original description information and the attribute information of the media. Compared with the original advertisement description information, the delivery demand of the advertisement after regeneration may have more abundant semantics, and can more accurately express the intent of the advertiser and better adapt to each media scenario.

For example, the input description of the advertiser or the selected group label may be regenerated by using the language model guided by using the first prompt. Because the first prompt carries the attribute information of the media, it is equivalent to that the language model may select appropriate group labels or keyword labels for the advertiser on different media with reference to different scenario information.

It should be understood that, in this embodiment of this application, although information before and after generation is described as information in two different dimensions: "advertisement description information" and "advertisement delivery demand", the two pieces of information may actually be different information in a same dimension. For example, the "advertisement delivery demand" is a new result of regeneration of the "advertisement description information".

In this embodiment of this application, a more generalized delivery demand may be generated based on the description information (for example, a keyword or a provided natural language description) of the advertisement specified by the advertiser, to formulate a more complete advertisement delivery task. In addition, the keyword or the natural language description provided by the user is not scenario-specific, but different tasks that are more suitable for a scenario and a user demand need to be specified in different media scenarios. In this embodiment of this application, a scenario-adaptive task construction capability can be provided based on a prompt and a language model.

In a possible implementation, the delivery demand generated by using the language model includes a plurality of slots and a description corresponding to each slot. Each slot corresponds to one demand. Specifically, the plurality of slots may be specified in the prompt, and the language model may be guided by using the first prompt to generate the description of the delivery demand corresponding to each slot. In other words, the first prompt may specifically indicate to generate, based on the description information and the attribute information of the media, the plurality of slots and the description corresponding to each slot. Each slot corresponds to one delivery demand.

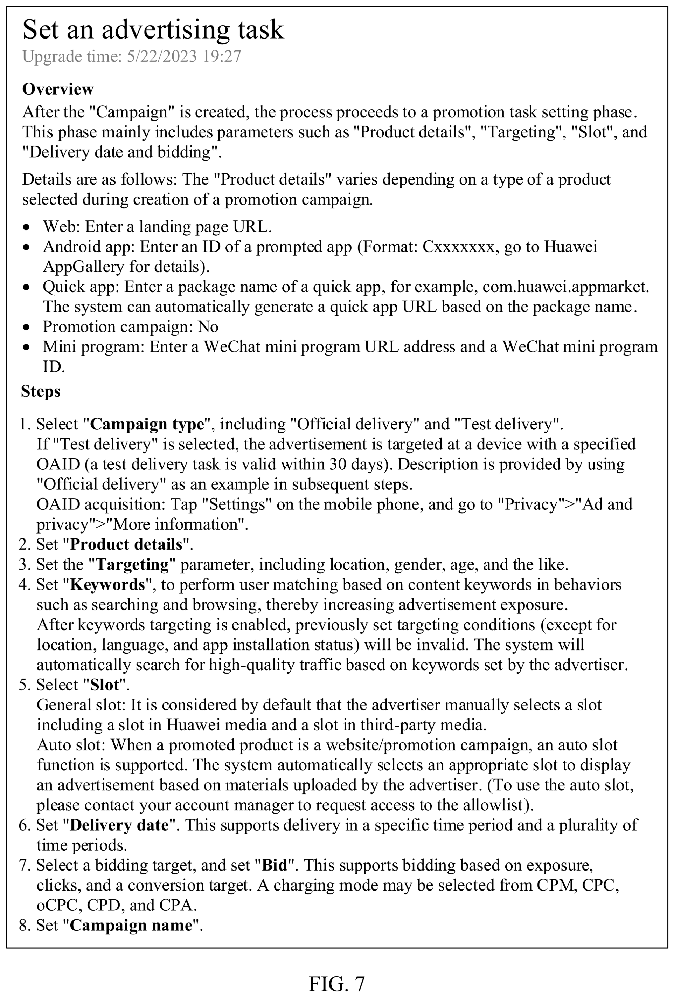

For example, FIG. 7 is a diagram of setting a delivery task. An advertiser may input description information of an advertisement in a manner shown in FIG. 7. In addition, optionally, the advertiser may be further notified that a system is to enhance a delivery demand of an advertisement.

In addition, generally, the attribute information of the media may include descriptive information of the media, and may further include attribute information of a user using the media (the attribute information of the user can indicate a feature of preference for the media, and therefore may be used as one piece of the attribute information of the media). The attribute information of the user may be information maintained by a DMP. Generally, the attribute information of the user is represented by using a label in limited space. However, this representation manner has poor generalization and lacks rich semantic information expression.

In this embodiment of this application, the attribute information of the user is enriched by constructing a prompt (third prompt). Specifically, the third prompt may be obtained. The third prompt includes a historical behavior of the user. The third prompt indicates to enrich profile information of the user based on the historical behavior. The historical behavior may be historical operation information (for example, an advertisement on which a click behavior occurs) of the user on a media platform. The profile information of the user is obtained based on the third prompt by using the language model. The profile information of the user obtained by using the language model may be used as the attribute information of the media. The profile information, obtained by using the language model, of the user may include a regenerated result of the historical behavior of the user. The result may include a behavior that has not been performed by the user in the past but is likely to be performed in the future. The result may further include another description with richer semantics for the historical behavior of the user.

The DMP data management platform stores data such as a user profile, a feature, and scenario information. The data is used by the DSP demand-side platform to formulate advertising plans and tasks. When the user request arrives, during a transaction, the ADX uses data and features related to the user at the DSP to predict a potential value of the advertisement.

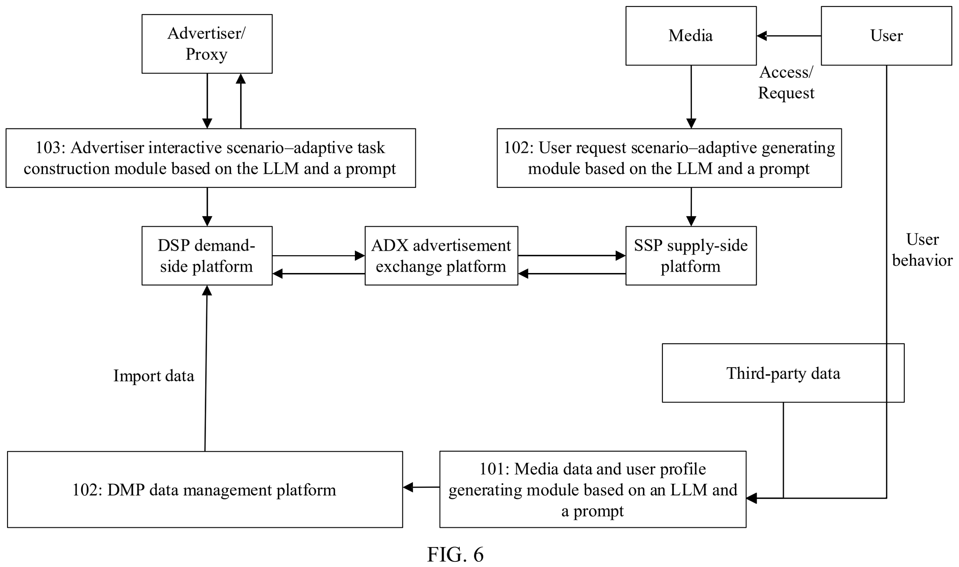

With reference to FIG. 6, media description data and user profile data with more generalized and abundant semantic information may be generated based on a generating module by using original media data and an original user profile as an input through constructing an appropriate prompt policy and using a large language model capability, where the generating module is used for generating media data and a user profile based on an LLM and a prompt.

For example, the advertiser needs to set information such as "Product details", "Targeting", and "Keywords". For example, for keywords, the advertiser needs to perform matching based on content keywords in searching and user browsing behaviors, to increase exposure. In this embodiment of this application, content to be selected by the user is not limited to an original sample in original user behaviors such as searching and browsing, and further includes a keyword in content information generated based on the LLM. Although the keyword does not necessarily appear in an existing behavior, the keyword may appear in the future and is strongly associated with a current behavior.

It should be understood that a specific form and format of the prompt are not limited in this embodiment of this application. For example, the prompt may be in a natural language, or may be a representation obtained through embedding processing.

502: Obtain the delivery demand on the media based on the first prompt by using the language model.

The delivery task is usually not formulated overnight. After the language model obtains the delivery demand based on the first prompt, the advertiser may adjust a result obtained by using the language model, and the language model may regenerate a delivery demand based on an adjusted demand. For example, the task formulated by the language model may be adjusted and regenerated based on another interaction manner such as a dialog.

In a possible implementation, a candidate delivery demand on the media may be obtained based on the first prompt by using the language model; and modification information for the candidate delivery demand may be received, and the delivery demand on the media may be obtained based on a second prompt by using the language model, where the second prompt indicates to modify the candidate delivery demand based on the modification information. In other words, the language model may be guided by using the prompt to regenerate the delivery demand based on the modification information specified by the user.

503: Determine, based on a received advertisement access request of the user on the media and a relationship between the delivery demand and intent information of the user, whether to deliver the advertisement to the user.

For example, an advertisement delivery decision may be determined based on a matching relationship (and information such as an advertisement bid and charge) between the delivery demand and the intent information of the user.

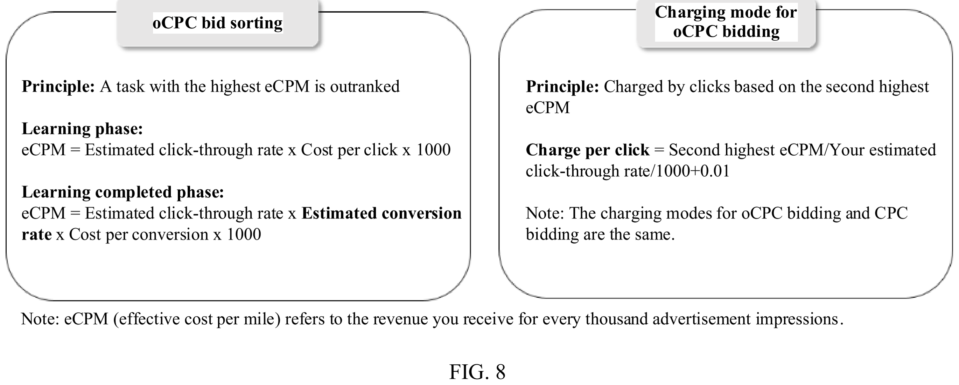

In a possible implementation, an advertisement delivery result may be determined by using the AND or the ADX. Generally, the advertisement delivery result needs to be determined based on the advertisement bidding and charging, and the advertisement bidding and charging are related to an estimated click-through rate or a conversion rate (for example, with reference to FIG. 8). Accuracy of the estimated conversion rate is related to the recalled advertisement and the user (for example, related to the intent information of the user). Therefore, estimation accuracy of the intent information of the user can be improved, and the click-through rate and the conversion rate of the advertisement can be improved accordingly.

In this embodiment of this application, for different user requests, user intents of the user that better conform to current scenarios may be generated for the user requests. The intent may provide a correlation between a recall advertisement and a user intent. In addition, the intent may more accurately depict a user profile, thereby promoting an estimated click-through rate and a conversion rate and finally improving advertising effect.

Specifically, the language model may be guided by using the prompt to generate the user intent that is of the user and that better conforms to a current scenario. In an implementation, a fourth prompt may be obtained. The fourth prompt includes corresponding context information (for example, time context and location context, and specifically, a market environment, a public opinion environment, and a hot spot at a current moment) when the user triggers an advertisement access request on the media. The fourth prompt indicates to determine the intent information of the user based on the context information. The intent information of the user is obtained based on the fourth prompt by using the language model.

Because the user may have different demands on different media ends under different context conditions, an advertising platform needs to generate a more accurate and appropriate user label (that is, the user intent in this embodiment of this application) for the user request based on the market environment, the public opinion environment, and the hot spot at the current moment. The more accurate and appropriate user label is more conducive to recalling an advertisement with a high click-through rate of the user.

When the media end receives traffic of the user, a corresponding advertisement request is triggered. Different users in different context conditions in different scenarios have different intents. In this embodiment of this application, a real-time scenario sensing intent can be more accurately generated for the user.

In the conventional technologies, information such as a user label is obtained based on original data by using a conventional data mining technology. In this embodiment of this application, generalization and deep semantic mining are performed on the original data based on the LLM, so that a stronger migration capability is provided, to alleviate a data sparseness problem. In the conventional technologies, task construction is usually performed by selecting the keyword or performing other settings by the advertiser. The advertiser cannot understand differences of all scenarios and cannot accurately describe the demand of the advertiser by using keywords of the DSP. The pain point can be resolved by using the LLM. In addition, interactive task construction can be further implemented by using the LLM. The current request is usually sent to the DSP with a user ID and scenario information to perform a series of operations such as advertisement recalling and bidding. The user ID can be used to manage a related behavior for modeling. The LLM can be used to resolve the pain point without a deeper understanding of the current user intent.

The language model is guided by using the third prompt to regenerate a more generalized profile with more abundant semantics for the user profile, thereby reducing data sparseness.

Further, the language model is guided by using the fourth prompt to generate scenario-adaptive user intents for different user requests, to accurately describe a current request intent, thereby improving advertisement recall efficiency and relevance and finally improving advertisement effect.

In addition, the language model is guided by using the first prompt, to help an advertiser efficiently and accurately construct an advertisement delivery task at a scenario granularity without media background knowledge. In addition, the advertisement delivery task may be adjusted in an interactive manner.

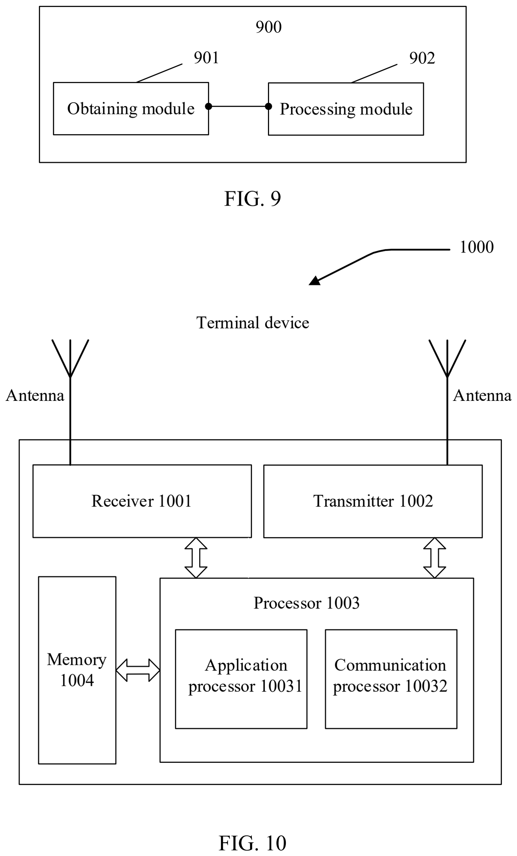

The following describes, from a perspective of an apparatus, a data processing apparatus provided in an embodiment of this application. FIG. 9 is a diagram of a structure of a data processing apparatus according to an embodiment of this application. As shown in FIG. 9, the data processing apparatus 900 provided in this embodiment of this application includes the following modules.

An obtaining module 901 is configured to obtain a first prompt. The first prompt includes description information of an advertisement and attribute information of a media. The media is a delivery platform of the advertisement. The first prompt indicates to generate a delivery demand of the advertisement on the media based on the description information and the attribute information of the media.

For specific descriptions of the obtaining module 901, refer to the descriptions of step 501 in the foregoing embodiment. Details are not described herein again.

A processing module 902 is configured to: obtain the delivery demand on the media based on the first prompt by using a language model; and

determine, based on a received advertisement access request of a user on the media and a relationship between the delivery demand and intent information of the user, whether to deliver the advertisement to the user.

For specific descriptions of the processing module 902, refer to the descriptions of step 502 and step 503 in the foregoing embodiment. Details are not described herein again.

In a possible implementation, the delivery demand includes a plurality of slots and a description corresponding to each slot. Each slot corresponds to one demand. The first prompt specifically indicates to generate, based on the description information and the attribute information of the media, the plurality of slots and the description corresponding to each slot. Each slot corresponds to one delivery demand.

In a possible implementation, the processing module 902 is specifically configured to:

obtain a candidate delivery demand on the media based on the first prompt by using the language model; and
receive modification information for the candidate delivery demand, and obtain the delivery demand on the media based on a second prompt by using the language model, where the second prompt indicates to modify the candidate delivery demand based on the modification information.

In a possible implementation, the obtaining module 901 is further configured to:
obtain a third prompt, where the third prompt includes a historical behavior of the user, and the third prompt indicates to enrich profile information of the user based on the historical behavior.

The processing module 902 is further configured to obtain the attribute information of the user based on the third prompt by using the language model. The attribute information of the media includes the profile information of the user.

In a possible implementation, the obtaining module 901 is further configured to:
obtain a fourth prompt, where the fourth prompt includes corresponding context information when the user triggers an advertisement access request on the media, and the fourth prompt indicates to determine the intent information of the user based on the context information.

The processing module 902 is further configured to obtain the intent information of the user based on the fourth prompt by using the language model.

The following describes a terminal device provided in an embodiment of this application. FIG. 10 is a diagram of a structure of a terminal device according to an embodiment of this application. The terminal device 1000 may be specifically a mobile phone, a tablet computer, a notebook computer, an intelligent wearable device, or the like. This is not limited herein. The terminal device 1000 implements functions of the data processing method in the embodiment corresponding to FIG. 5. Specifically, the terminal device 1000 includes a receiver 1001, a transmitter 1002, a processor 1003 (there may be one or more processors 1003 in the terminal device 1000), and a memory 1004. The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions used to implement various operations.

The processor 1003 controls an operation of the terminal device. In specific application, components of the terminal device are coupled together by using a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1003, or may be implemented by the processor 1003. The processor 1003 may be an integrated circuit chip and has a signal processing capability. In an implementation process, the steps in the method can be implemented by using a hardware integrated logic circuit in the processor 1003 or by using instructions in a form of software. The processor 1003 may be a general-purpose processor, a digital signal processor (digital signal processor, DSP), a microprocessor or microcontroller, a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1003 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1004. The processor 1003 reads information in the memory 1004, and completes steps 501 to 503 in the foregoing embodiment in combination with hardware of the processor 1003.

The receiver 1001 may be configured to: receive input digital or character information, and generate signal input related to a relevant setting and function control of the terminal device. The transmitter 1002 may be configured to output the digital or character information through a first interface. The transmitter 1002 may be further configured to send instructions to a disk group through the first interface, to modify data in the disk group. The transmitter 1002 may further include a display device such as a display.

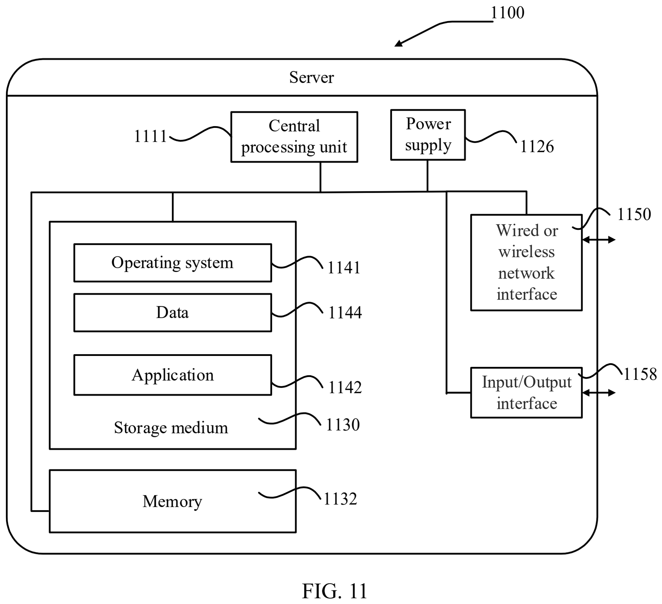

An embodiment of this application further provides a server. FIG. 11 is a diagram of a structure of a server according to an embodiment of this application. Specifically, the server 1100 is implemented by one or more servers. The server 1100 may vary greatly due to different configurations or performance, and may include one or more central processing units (central processing units, CPUs) 1111 (for example, one or more processors) and a memory 1132, and one or more storage media 1130 (for example, one or more mass storage devices) that stores an application 1142 or data 1144. The memory 1132 and the storage medium 1130 may be used for temporary storage or persistent storage. A program stored in the storage medium 1130 may include one or more modules (not shown in the figure), and each module may include a series of instruction operations for the server. Further, the central processing unit 1111 may be configured to: communicate with the storage medium 1130, and execute, on the server 1100, the series of instruction operations in the storage medium 1130.

The server 1100 may further include one or more power supplies 1126, one or more wired or wireless network interfaces 1150, one or more input/output interfaces 1158, and/or one or more operating systems 1141, for example, Windows ServerTM, Mac OS XTM, UnixTM, LinuxTM, and FreeBSDTM.

Specifically, the server may perform steps 501 to 503 in the foregoing embodiment.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used to process a signal. When the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

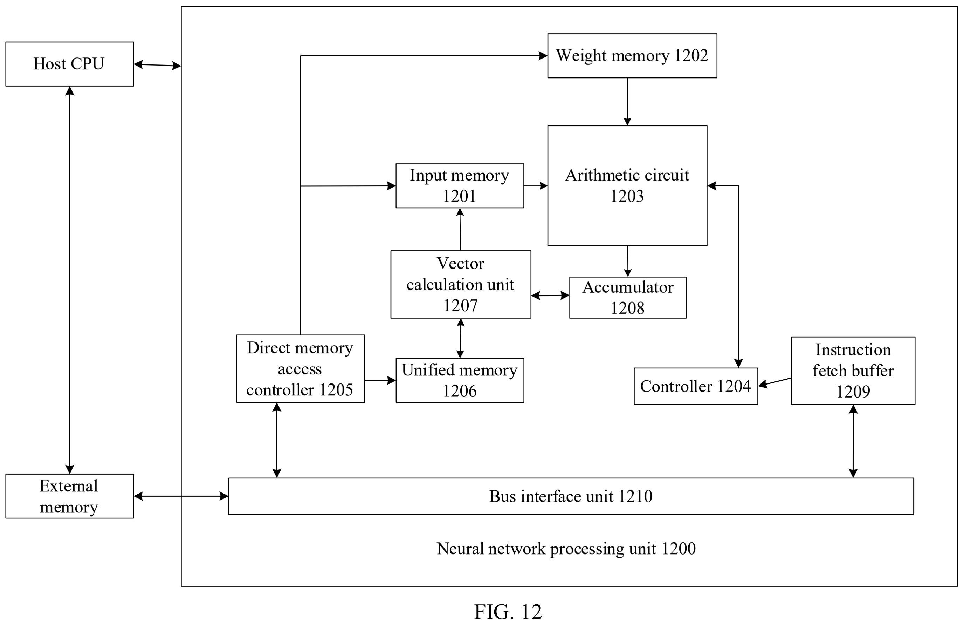

Specifically, FIG. 12 is a diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an arithmetic circuit 1203, and a controller 1204 controls the arithmetic circuit 1203 to extract matrix data in a memory and perform a multiplication operation.

The NPU 1200 may implement, through cooperation between internal components, the data processing method provided in the embodiment described in FIG. 5.

More specifically, in some implementations, the arithmetic circuit 1203 in the NPU 1200 includes a plurality of process engines (Process Engines, PEs). In some implementations, the arithmetic circuit 1203 is a twodimensional systolic array. The arithmetic circuit 1203 may alternatively be a one-dimensional systolic array or another electronic circuit capable of performing mathematical operations such as multiplication and addition. In some implementations, the arithmetic circuit 1203 is a general-purpose matrix processor.

For example, it is assumed that there is an input matrix A, a weight matrix B, and an output matrix C. The arithmetic circuit fetches, from a weight memory 1202, data corresponding to the matrix B, and caches the data on each PE in the arithmetic circuit. The arithmetic circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. Weight data is directly transferred to the weight memory 1202 by using a direct memory access controller DMAC (Direct Memory Access Controller, DMAC) 1205. The input data is also transferred to the unified memory 1206 by using the DMAC.

A BIU is a bus interface unit, namely, a bus interface unit 1210, and is configured to perform interaction between an AXI bus, and the DMAC and an instruction fetch buffer (Instruction Fetch Buffer, IFB) 1209.

The bus interface unit (Bus Interface Unit, BIU for short) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to: transfer input data in the external memory DDR to the unified memory 1206, transfer weight data to the weight memory 1202, or transfer input data to the input memory 1201.

A vector calculation unit 1207 includes a plurality of operation processing units. If necessary, further processing is performed on an output of the arithmetic circuit 1203, for example, vector multiplication, vector addition, an exponential operation, a logarithmic operation, or value comparison. The vector calculation unit 1207 is mainly used for non-convolutional/fully connected layer network computation in a neural network, such as batch normalization (batch normalization), pixel-level summation, and upsampling on a feature map.

In some implementations, a processed vector output by the vector calculation unit 1207 can be stored in the unified memory 1206. For example, the vector calculation unit 1207 may apply a linear function or a nonlinear function to the output of the arithmetic circuit 1203, for example, perform linear interpolation on a feature plane extracted at a convolutional layer. For another example, the linear function or the nonlinear function is applied to a vector of an accumulated value to generate an activation value. In some implementations, the vector calculation unit 1207 generates a normalized value, a pixel-level summation value, or both. In some implementations, the processed output vector can be used as an activated input to the arithmetic circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one place, or may be distributed on a plurality of network units. A part or all of the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, in this application, software program implementation is a better implementation in most cases. Based on such an understanding, the technical solutions of this application essentially or the part contributing to the conventional technologies may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

**Claims**

1. A data processing method, wherein the method comprises:

    obtaining a first prompt, wherein the first prompt comprises description information of an advertisement and attribute information of a media, the media is a delivery platform of the advertisement, and the first prompt indicates to generate a delivery demand of the advertisement on the media based on the description information and the attribute information of the media;
    obtaining the delivery demand on the media based on the first prompt by using a language model; and
    determining, based on a received advertisement access request of a user on the media and a relationship between the delivery demand and intent information of the user, whether to deliver the advertisement to the user.

2. The method according to claim 1, wherein the delivery demand comprises a plurality of slots and a description corresponding to each slot, and each slot corresponds to one demand; and the first prompt specifically indicates to generate, based on the description information and the attribute information of the media, the plurality of slots and the description corresponding to each slot, and each slot corresponds to one delivery demand.

3. The method according to claim 1 or 2, wherein obtaining the delivery demand on the media based on the first prompt by using the language model comprises:

    obtaining a candidate delivery demand on the media based on the first prompt by using the language model; and
    receiving modification information for the candidate delivery demand, and obtaining the delivery demand on the media based on a second prompt by using the language model, wherein the second prompt indicates to modify the candidate delivery demand based on the modification information.

4. The method according to any one of claims 1 to 3, wherein the method further comprises:

    obtaining a third prompt, wherein the third prompt comprises a historical behavior of the user, and the third prompt indicates to enrich profile information of the user based on the historical behavior; and
    obtaining the attribute information of the user based on the third prompt by using the language model, wherein the attribute information of the media comprises the profile information of the user.

5. The method according to any one of claims 1 to 4, wherein the method further comprises:

obtaining a fourth prompt, wherein the fourth prompt comprises corresponding context information when the user triggers an advertisement access request on the media, and the fourth prompt indicates to determine the intent information of the user based on the context information; and

obtaining the intent information of the user based on the fourth prompt by using the language model.

6. A data processing apparatus, wherein the apparatus comprises:

an obtaining module, configured to obtain a first prompt, wherein the first prompt comprises description information of an advertisement and attribute information of a media, the media is a delivery platform of the advertisement, and the first prompt indicates to generate a delivery demand of the advertisement on the media based on the description information and the attribute information of the media; and

a processing module, configured to: obtain the delivery demand on the media based on the first prompt by using a language model; and

determine, based on a received advertisement access request of a user on the media and a relationship between the delivery demand and intent information of the user, whether to deliver the advertisement to the user.

7. The apparatus according to claim 6, wherein the delivery demand comprises a plurality of slots and a description corresponding to each slot, and each slot corresponds to one demand; and the first prompt specifically indicates to generate, based on the description information and the attribute information of the media, the plurality of slots and the description corresponding to each slot, and each slot corresponds to one delivery demand.

8. The apparatus according to claim 6 or 7, wherein the processing module is specifically configured to:

obtain a candidate delivery demand on the media based on the first prompt by using the language model; and

receive modification information for the candidate delivery demand, and obtain the delivery demand on the media based on a second prompt by using the language model, wherein the second prompt indicates to modify the candidate delivery demand based on the modification information.

9. The apparatus according to any one of claims 6 to 8, wherein the obtaining module is further configured to:

obtain a third prompt, wherein the third prompt comprises a historical behavior of the user, and the third prompt indicates to enrich profile information of the user based on the historical behavior; and

the processing module is further configured to obtain the attribute information of the user based on the third prompt by using the language model, wherein the attribute information of the media comprises the profile information of the user.

10. The apparatus according to any one of claims 6 to 9, wherein the obtaining module is further configured to:

obtain a fourth prompt, wherein the fourth prompt comprises corresponding context information when the user triggers an advertisement access request on the media, and the fourth prompt indicates to determine the intent information of the user based on the context information; and

the processing module is further configured to obtain the intent information of the user based on the fourth prompt by using the language model.

11. A computing device, wherein the computing device comprises a memory and a processor, the memory stores code, and the processor is configured to: obtain the code, and perform the method according to any one of claims 1 to 5.

12. A computer storage medium, wherein the computer storage medium stores one or more instructions, and when the instructions are executed by one or more computers, the one or more computers are enabled to implement the method according to any one of claims 1 to 5.

13. A computer program product, comprising code, wherein when the code is executed, the method according to any one of claims 1 to 5 is implemented.

14. A chip, comprising a processor, wherein the processor is configured to support a data processing apparatus in implementing the method according to any one of claims 1 to 5.

FIG. 1

FIG. 2

300

Execution device 210

Data storage system 250

Communication network

Local device 301

Local device 302

For example

FIG. 3

Offline training module → Recommendation model → Online prediction module

A user performs feedback for displayed items

Select and rank the to-be-displayed items

FIG. 4

| | |
|---|---|
| Obtain a first prompt, where the first prompt includes description information of an advertisement and attribute information of a media, the media is a delivery platform of the advertisement, and the first prompt indicates to generate a delivery demand of the advertisement on the media based on the description information and the attribute information of the media | 501 |
| Obtain the delivery demand on the media based on the first prompt by using a language model | 502 |
| Determine, based on a received advertisement access request of a user on the media and a relationship between the delivery demand and intent information of the user, whether to deliver the advertisement to the user | 503 |

FIG. 5

FIG. 6

# Set an advertising task

Upgrade time: 5/22/2023 19:27

**Overview**

After the "Campaign" is created, the process proceeds to a promotion task setting phase. This phase mainly includes parameters such as "Product details", "Targeting", "Slot", and "Delivery date and bidding".

Details are as follows: The "Product details" varies depending on a type of a product selected during creation of a promotion campaign.

- Web: Enter a landing page URL.
- Android app: Enter an ID of a prompted app (Format: Cxxxxxxx, go to Huawei AppGallery for details).
- Quick app: Enter a package name of a quick app, for example, com.huawei.appmarket. The system can automatically generate a quick app URL based on the package name.
- Promotion campaign: No
- Mini program: Enter a WeChat mini program URL address and a WeChat mini program ID.

**Steps**

1. Select "**Campaign type**", including "Official delivery" and "Test delivery".
   If "Test delivery" is selected, the advertisement is targeted at a device with a specified OAID (a test delivery task is valid within 30 days). Description is provided by using "Official delivery" as an example in subsequent steps.
   OAID acquisition: Tap "Settings" on the mobile phone, and go to "Privacy">"Ad and privacy">"More information".
2. Set "**Product details**".
3. Set the "**Targeting**" parameter, including location, gender, age, and the like.
4. Set "**Keywords**", to perform user matching based on content keywords in behaviors such as searching and browsing, thereby increasing advertisement exposure.
   After keywords targeting is enabled, previously set targeting conditions (except for location, language, and app installation status) will be invalid. The system will automatically search for high-quality traffic based on keywords set by the advertiser.
5. Select "**Slot**".
   General slot: It is considered by default that the advertiser manually selects a slot including a slot in Huawei media and a slot in third-party media.
   Auto slot: When a promoted product is a website/promotion campaign, an auto slot function is supported. The system automatically selects an appropriate slot to display an advertisement based on materials uploaded by the advertiser. (To use the auto slot, please contact your account manager to request access to the allowlist).
6. Set "**Delivery date**". This supports delivery in a specific time period and a plurality of time periods.
7. Select a bidding target, and set "**Bid**". This supports bidding based on exposure, clicks, and a conversion target. A charging mode may be selected from CPM, CPC, oCPC, CPD, and CPA.
8. Set "**Campaign name**".

FIG. 7

**oCPC bid sorting**

**Principle:** A task with the highest eCPM is outranked

**Learning phase:**
eCPM = Estimated click-through rate x Cost per click x 1000

**Learning completed phase:**
eCPM = Estimated click-through rate x **Estimated conversion rate** x Cost per conversion x 1000

**Charging mode for oCPC bidding**

**Principle:** Charged by clicks based on the second highest eCPM

**Charge per click** = Second highest eCPM/Your estimated click-through rate/1000+0.01

Note: The charging modes for oCPC bidding and CPC bidding are the same.

Note: eCPM (effective cost per mile) refers to the revenue you receive for every thousand advertisement impressions.

FIG. 8

900

901                                                                          902

| Obtaining module | —•———•— | Processing module |

**FIG. 9**

1000

Terminal device

Antenna                                                    Antenna

| Receiver 1001 | | Transmitter 1002 |

Processor 1003

| Application processor 10031 | Communication processor 10032 |

Memory 1004

**FIG. 10**

1100

Server

1111 — Central processing unit

Power supply — 1126

Operating system — 1141

Data — 1144

Application — 1142

Storage medium — 1130

Wired or wireless network interface — 1150

Input/Output interface — 1158

Memory — 1132

FIG. 11

FIG. 12

## INTERNATIONAL SEARCH REPORT

International application No.

**PCT/CN2024/106078**

| A. | CLASSIFICATION OF SUBJECT MATTER |
|---|---|

G06Q 30/0251(2023.01)i

According to International Patent Classification (IPC) or to both national classification and IPC

| B. | FIELDS SEARCHED |
|---|---|

Minimum documentation searched (classification system followed by classification symbols)

IPC: G06Q

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 提示, 描述, 需求, 意图, 预测, 语言模型, 大语言模型, 媒体, 渠道, 指定, 用户画像, prompt, description, need, intention, predict, , language model, large language model, LLM, NLP, media, channel, designation, user picture

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117057855 A (HUAWEI TECHNOLOGIES CO., LTD.) 14 November 2023 (2023-11-14) claims 1-14 | 1-14 |
| Y | CN 112465555 A (BEIJING SOGOU TECHNOLOGY DEVELOPMENT CO., LTD.) 09 March 2021 (2021-03-09) abstract, description, paragraphs 89-95 and 105-159, and figure 2 | 1-14 |
| Y | SinoClick. "ChatGPT运营攻略—广告投放常用的五类Prompt模板 (Non-official translation: ChatGPT's Operation Strategy: Five Types of Common Prompt Templates For Launching Advertisement)" https://www.163.com/dy/article/I8NEBHLI0553X6V0.html, 03 July 2023 (2023-07-03), pages 1 and 3-4 | 1-14 |
| A | CN 106204087 A (BEIJING PAGECHOICE NETWORK TECHNOLOGY CO., LTD.) 07 December 2016 (2016-12-07) entire document | 1-14 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2024** | **20 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/106078**

| C. | DOCUMENTS CONSIDERED TO BE RELEVANT | |
|---|---|---|
| Category* | Citation of document, with indication, where appropriate, of the relevant passages | Relevant to claim No. |
| A | CN 111445279 A (SHANGHAI ACROSS INFORMATION TECHNOLOGY CO., LTD.) 24 July 2020 (2020-07-24) entire document | 1-14 |
| A | US 2020279299 A1 (FUNNELAI, INC.) 03 September 2020 (2020-09-03) entire document | 1-14 |

Form PCT/ISA/210 (second sheet) (July 2022)

**INTERNATIONAL SEARCH REPORT**
Information on patent family members

| International application No. |
| PCT/CN2024/106078 |

| Patent document cited in search report | | | Publication date (day/month/year) | Patent family member(s) | | | Publication date (day/month/year) |
|---|---|---|---|---|---|---|---|
| CN | 117057855 | A | 14 November 2023 | None | | | |
| CN | 112465555 | A | 09 March 2021 | None | | | |
| CN | 106204087 | A | 07 December 2016 | None | | | |
| CN | 111445279 | A | 24 July 2020 | None | | | |
| US | 2020279299 | A1 | 03 September 2020 | US | 11120476 | B2 | 14 September 2021 |

Form PCT/ISA/210 (patent family annex) (July 2022)

**REFERENCES CITED IN THE DESCRIPTION**

**Patent documents cited in the description**

- CN 202310896986